# EUROPEAN PATENT SPECIFICATION

(11) **EP 3 578 585 B1**
(45) Date of publication and mention of the grant of the patent: **09.11.2022**
(21) Application number: 19178141.8
(22) Date of filing: 04.06.2019
(51) Int. Cl.: C08G 65/00, C08L 71/00, C08K 9/04

(54) **ISOLATION AND PURIFICATION METHOD OF PERFLUOROPOLYETHER COMPOUND**
ISOLIER- UND REINIGUNGSVERFAHREN FÜR EINE PERFLUORPOLYETHERVERBINDUNG
PROCÉDÉ D'ISOLATION ET DE PURIFICATION D'UN COMPOSÉ DE PERFLUOROPOLYÉTHER

(30) Priority: 08.06.2018 JP 2018110635
(43) Date of publication of application: 11.12.2019
(73) Proprietor: Shin-Etsu Chemical Co., Ltd., Tokyo 100-0004 (JP)
(72) Inventor: MATSUDA, Takashi, Gunma, 379-0224 (JP); SAKANO, Yasunori, Gunma, 379-0224 (JP)
(74) Representative: Zacco GmbH

(56) References cited:
- EP-A1- 2 514 725
- EP-A1- 3 037 455

## Description

### [Technical field]

The present invention relates to a method for efficiently and selectively isolating a perfluoropolyether compound only having target end functional groups from a mixture containing at least two kinds of perfluoropolyether compounds, by separating and eliminating a perfluoropolyether compound(s) having non-target end functional groups, such perfluoropolyether compound(s) being originally mixed in with the mixture containing the perfluoropolyether compound having the target end functional groups. Particularly, the invention relates to a method for efficiently isolating only a perfluoropolyether compound having hydroxyl groups and/or alkenyl groups at its ends in a case where a perfluoropolyether compound having carboxyl groups and/or ester groups at its ends is mixed in with a mixture containing the perfluoropolyether compound having hydroxyl groups and/or alkenyl groups at its ends.

### [Background art]

A linear perfluoropolyether compound having a functional group(s) at one end of its molecular chain (referred to as one-end derivative hereunder) and a linear perfluoropolyether compound having a functional group at both ends of its molecular chain (referred to as both-end derivate hereunder) (these types of compounds are referred to as functional polymers hereunder), are often used as precursors of various derivatives such as a surfactant and a surface treatment agent. For example, as a precursor of a surfactant that is useful in polymer polymerization, there can be listed an acrylic derivative, amine derivative and isocyanate derivative of the above functional polymers. Further, as a precursor of a surface treatment agent, there can be listed, for example, an alcohol derivative, alkenyl (vinyl, allyl) derivative, alkoxy derivative, chloro derivative and silazane derivative of the above functional polymers. As for a surface treatment agent, when the main purpose is to impart an antifouling property and a slip property, preferred are those having a number average molecular weight of about 2,000 to 8,000 in terms of polystyrene, when measured in a gel permeation chromatography (GPC) analysis.

In general, a polymer, especially a linear polymer tends to relatively exhibit a lower concentration of end functional groups as the molecular weight thereof increases. In a polymer, a blocking ratio and modification ratio of end functional groups are critical in terms of exhibiting target properties unique to end functional groups. When those ratios are insufficient, a polymer cannot easily exhibit target properties. A lower end modification ratio may be observed when a reaction of end modification is insufficient, and/or when the original raw material prior to modification also has, as an impurity, a polymer(s) with different types of ends. In either case, required is a method for eliminating a polymer component having non-target ends.

As for a polymer having a perfluoropolyether structure on its main chain, the following method is disclosed as a method for purifying a polymer having a target end(s), using a solid adsorbent.

In Patent documents 1 and 2, a both end-functional polymer is at first partially fluorinated to produce a mixture of a one end-functional polymer, a both end-functional polymer and a nonfunctional polymer, followed by eliminating the nonfunctional polymer produced. In Patent documents 1 and 2, an adsorption method by an ion-exchange resin and a thin film distillation method are disclosed as methods for eliminating the nonfunctional polymer. Disadvantages with a method employing an ion-exchange resin are as follows. For example, an organic component(s) contained in the resin may be released into an extraction solvent; a coloring component of the resin may be lost; and with regard to certain solvents, a poorer extraction efficiency may be observed as the resin swells. In a thin film distillation method, although isolation can be performed with a nonfunctional polymer being a main component, polymers in general have molecular weight distributions, which imposes limitations on selective isolation.

Patent document 3 relates to a method for producing a fluorine-based lubricant for magnetic recording media. In Patent document 3, a fluorine-based lubricant with a functional group such as a piperonyl group already being introduced to both ends thereof, is added to a chromatography whose mobile phase is a carbon dioxide in a supercritical state, and whose solid phase is silica gel. A plurality of fractions are then prepared via fractionation, followed by selecting from these fractions a fraction(s) with a high functional group introduction rate, thereby producing a fluorine-based lubricant with a high average functional group introduction rate, especially as high as or higher than 95%. With the method described in Patent document 3, it is possible to increase the end functional group induction rate of a both end-functional polymer from about 90% to 99%.

In Patent document 4, dissolved into a fluorinated organic solvent is a mixture of a one end-functional polymer having a carboxyl group as an end functional group thereof; a both end-functional polymer; and a nonfunctional polymer. A solution thus obtained is then brought into contact with a solid phase such as a silica gel so as to allow the functional polymers to be adsorbed to the solid phase. The solid phase and a solution in which the nonfunctional polymer is dissolved are then separated from each other by, for example, filtration. Next, the solid phase is brought into contact with a mixed solvent of a fluorinated organic solvent and an alcohol, followed by again performing filtration, thereby isolating therefrom a polymer whose main component is the one end-functional polymer.

Patent document 5 discloses a method for isolating a perfluoro(poly)ether group-containing carboxylic compound. Specifically, mixed are: a mixture of a one end-functional polymer having a carboxyl group as an end functional group, a both end-functional polymer and a nonfunctional polymer; a fluorine atom-containing non-polar solvent; and a polar solid phase, followed by using a non-polar mobile phase to isolate the nonfunctional polymer from the polar solid phase, and then using a polar mobile phase to isolate the one end-functional polymer and the both end-functional polymer from the polar solid phase. Further, in Patent document 5, the polar mobile phase is a fluorine atom-containing polar solvent; a combination of a fluorine atom-containing non-polar solvent and a fluorine atom-containing polar solvent; or a combination of a fluorine atom-containing non-polar solvent and a fluorine atom-free polar solvent. As the fluorine atom-containing polar solvent, there are listed a fluorine atom-containing alcohol, a fluorine atom-containing carboxylic acid and a fluorine atom-containing sulfonic acid. As the fluorine atom-free polar solvent, there are listed acidic polar solvents such as a fluorine atom-free carboxylic acid, a fluorine atom-free phenol and a fluorine atom-free sulfonic acid.

### [Prior art document]

### [Patent document]

[Patent document 1] JP-A-2012-233157
[Patent document 2] JP-A-2012-72272
[Patent document 3] JP-A-2001-164279
[Patent document 4] Japanese Unexamined Patent Application Publication (Translation of PCT Application) No.2015-535017
[Patent document 5] Japanese Patent No.5668888

### [Summary of the invention]

### [Problem to be solved by the invention]

Although the method described in Patent document 3 is an effective measure in terms of obtaining a composition containing a both end-functional polymer at a high concentration by eliminating a nonfunctional perfluoropolyether compound, the method cannot be applied to the isolation of different types of functional groups other than nonfunctional groups. In the method described in Patent document 4, a polymer having a carboxyl group at its ends and a nonfunctional polymer are isolated, followed by using an alcohol to collect a component(s) that have been adsorbed to a silica gel. While this method is a one utilizing a phenomenon where a carboxyl group adjacent to a fluorine main chain turns to alkyl ester when reacted with alcohol at normal temperature, the method likewise cannot be applied to the isolation of different types of functional groups other than nonfunctional groups. The method described in Patent document 5 uses an acidic polar compound(s). Acidic polar compounds shall not be preferable, because they require careful handling, and may corrode metal parts, for example. Moreover, the method described in Patent document 5 likewise cannot be applied to the isolation of different types of functional groups other than nonfunctional groups.

Thus, it is an object of the present invention to provide a method for efficiently and selectively isolating a perfluoropolyether compound only having a target functional group(s) from a mixture containing at least two kinds of perfluoropolyether compounds.

### [Means to solve the problem]

The inventors of the present invention diligently conducted a series of studies, and completed the invention as follows. That is, the inventors found a method for easily, efficiently and selectively obtaining only a perfluoropolyether compound having a target functional group(s), by efficiently eliminating a perfluoropolyether compound having a non-target functional group(s) from a mixture containing at least two kinds of perfluoropolyether compounds, using a solid adsorbent having primary amino groups.

Specifically, the present invention is to provide a method for isolating and purifying a perfluoropolyether compound as disclosed in the claims.

### [Effects of the invention]

With the method of the present invention, it is possible to efficiently and selectively isolating a perfluoropolyether compound only having a target functional group(s) from a mixture containing at least two kinds of perfluoropolyether compounds.

In this way, for example, a perfluoropolyether compound with a high modification ratio of target end functional groups can be obtained if applying the method of the present invention to a mixture containing at least two kinds of perfluoropolyether compounds, the mixture being produced as a result of a conversion reaction of the end functional groups. With such perfluoropolyether compound having a high modification ratio of the target end functional groups, properties unique to these target end functional groups will be fully exhibited, and the compound itself is thus useful as a precursor of various derivatives such as a surfactant and a surface treatment agent.

### [Mode for carrying out the invention]

The present invention is described in detail hereunder.

The present invention is a method for isolating and purifying a perfluoropolyether compound that is contained in a mixture containing at least two kinds of perfluoropolyether compounds, and has at molecular chain ends thereof only functional groups which are nonreactive with primary amino groups. The method includes: a process of bringing (C) a primary amino group-containing solid adsorbent into contact with a mixture containing (A) a perfluoropolyether compound having, at its molecular chain end(s) (usually, both ends of the molecular chain), only functional groups that are nonreactive with primary amino groups, wherein the groups in the component (A) that are nonreactive with primary amino groups are groups selected from a hydroxyl group, an alkenyl group, an amino group, a thiol group, and a halogenated alkyl group with a part of or all hydrogen atoms being substituted with halogen atoms; and (B) a perfluoropolyether compound having, at at least one molecular chain end thereof (i.e. one end or both ends of the molecular chain), functional groups that are reactive with or are capable of forming salts with primary amino groups, and then removing, from said mixture, the perfluoropolyether compound (B) that has been adsorbed to the solid adsorbent (C) in order to collect the perfluoropolyether compound (A) having, at molecular chain ends thereof, only functional groups that are nonreactive with primary amino groups. Particularly, this perfluoropolyether compound as the component (B) is to be adsorbed to the solid adsorbent (C) by reacting or forming a salt(s) with the primary amino groups on the surface of the solid adsorbent (C). Each of the perfluoropolyether compounds (A) and (B) has a number average molecular weight of 1,000 to 10,000.

### [Perfluoropolyether compound]

An unpurified mixture containing the purification target which is the perfluoropolyether compound having, at its molecular chain ends, only functional groups that are nonreactive with primary amino groups, is a mixture containing at least two kinds of perfluoropolyether compounds (polyfluorooxyalkylene compounds) that are composed of the following components (A) and (B) each having a number average molecular weight of 1,000 to 10,000.
(A) Perfluoropolyether compound having, at its molecular chain ends, only functional groups that are nonreactive with primary amino groups, wherein the groups in the component (A) that are nonreactive with primary amino groups are groups selected from a hydroxyl group, an alkenyl group, an amino group, a thiol group, and a halogenated alkyl group with a part of or all hydrogen atoms being substituted with halogen atoms,
(B) Perfluoropolyether compound having, at at least one molecular chain end thereof, functional groups that are reactive with or are capable of forming salts with primary amino groups

Such mixture containing the components (A) and (B) i.e. mixture containing at least two kinds of perfluoropolyether compounds, can be produced as a result of an insufficient conversion reaction of end functional groups on molecular chains.

In the present invention, the number average molecular weight of a perfluoropolyether compound (polyfluorooxyalkylene compound) refers to a number average molecular weight in terms of polystyrene, which is measured by gel permeation chromatography (GPC) under the following conditions.

### [Gel permeation chromatography (GPC) method]

### [Measurement condition]

Developing solvent: Hydrochlorofluorocarbon (HCFC) -225
Flow rate: 1 mL/min.
Detector: Evaporative light scattering detector
Column: TSKgel Multipore HXL-M 7.8 mmφ × 30 cm by Tosoh Corporation; two columns used
Column temperature: 35°C
Sample injection amount: 100 µL (HCFC-225 solution with a concentration of 0.3% by mass)

Further, the number average molecular weight of a perfluoropolyether compound can also be calculated via ¹⁹F-NMR measurement. When the perfluoropolyether compound of the present invention is expressed by the following formula (2):

[Chemical formula 2] X¹-Rf-X² (2)

(Rf represents a perfluoropolyether chain; X¹ and X² represent end groups that may be identical to or different from each other.), a method employing ¹⁹F-NMR measurement may be used when the structure of each of X¹, X² and Rf is clear, and peaks unique to each structure are capable of being detected by ¹⁹F-NMR measurement. That is, ¹⁹F-NMR measurement is to be performed on the compound represented by the formula (2), and the number average molecular weight can then be calculated from the integrated values of the end groups X¹ and X² as well as Rf as the polymer main chain portion. General conditions may be employed to carry out ¹⁹F-NMR measurement, and those conditions may be appropriately selected in accordance with a conventional and known method.

Each of the perfluoropolyether compounds (polyfluorooxyalkylene compounds) as the components (A) and (B) of the present invention is basically a linear compound having a polyfluorooxyalkylene structure (perfluoropolyether structure) in which a plurality of one or more repeating units selected from (CF₂O), (C₂F₄O), (C₃F₆O) and (C₄F₈O) are bonded together. Particularly, the number of such repeating units is 10 to 300, preferably 15 to 200, more preferably 20 to 100, and even more preferably 25 to 80.

Here, in the present invention, a linear structure refers to a structure where divalent fluorooxyalkylene groups as repeating units composing the polyfluorooxyalkylene structure (perfluoropolyether structure) as the main chain are linearly bonded to one another, whereas each fluorooxyalkylene group itself composing the aforementioned polyfluorooxyalkylene structure (perfluoropolyether structure) may be either linear or branched. Thus, each of the perfluoropolyether compounds as the components (A) and (B) of the present invention usually has one molecular chain end group at both ends of the polyfluorooxyalkylene structure (i.e. two molecular chain end groups per molecule).

Each of the abovementioned repeating units may be either linear or branched. The examples of such units are as follows.

-CF₂O-

-CF₂CF₂O-

-CF₂CF₂CF₂O-

-CF(CF₃)CF₂O-

-CF₂CF₂CF₂CF₂O-

-C(CF₃)₂O-

That is, when the perfluoropolyether compound (polyfluorooxyalkylene compound) of the invention is expressed by the formula (2), it is preferred that the perfluoropolyether chain represented by Rf be a perfluoropolyether chain represented by the following formula (1), preferably a perfluoropolyether chain represented by the following formula (3).
[Chemical formula 3]

-O(CF₂O)ₚ-(C₂F₄O)_{q}-(C₃F₆O)ᵣ-(C₄F₈O)ₛ- (1)

In the formula (1), each of p, q, r and s independently represents an integer of 0 to 200, and satisfies 10 ≤ (p+q+r+s) ≤ 300; and each unit shown in the bracket(s) may be bonded in a random manner.
[Chemical formula 4]

-O(CF₂O)_{p'}(CF₂CF₂O)_{q'}(CF₂CF₂CF₂O)_{r'}(CF₂CF₂CF₂CF₂O)_{s'}- (3)

In the formula (3), each of p' and q' independently represents an integer of 5 to 200, each of r' and s' independently represents an integer of 0 to 100, and each of p', q', r' and s' satisfies 10 ≤ (p'+q'+r'+s') ≤ 300; and each unit shown in the bracket(s) may be bonded in a random manner.

### -Component (A)-

The component (A) is a compound whose main chain has a perfluoropolyether structure. Further, this compound has, at its molecular chain end(s) (usually, both ends of the molecular chain), only functional groups that are nonreactive with primary amino groups. It is preferred that such compound be that represented by the following general formula (2A):

[Chemical formula 5] X^{1A}-Rf-X^{2A} (2A)

Rf represents a perfluoropolyether chain. It is preferred that Rf be the perfluoropolyether chain represented by the above formula (1), more preferably the perfluoropolyether chain represented by the above formula (3). X^{1A} and X^{2A} represent end groups having only functional groups that are nonreactive with primary amino groups, and may be either identical to or different from each other. The "functional groups that are nonreactive with amino groups" include a hydroxyl group, an alkenyl group, an amino group, a thiol group, and a halogenated alkyl group with a part of or all hydrogen atoms being substituted with halogen atoms. More preferable examples of the "functional groups that are nonreactive with amino groups" include a hydroxyl group, an alkenyl group, and a halogenated alkyl group with a part of or all hydrogen atoms being substituted with halogen atoms.

The following groups are specific examples of X^{1A} and X^{2A} i.e. end groups having only functional groups that are nonreactive with primary amino groups.

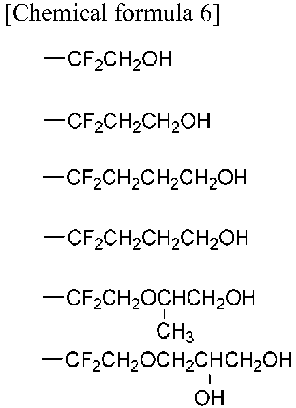

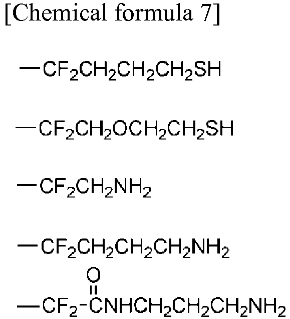

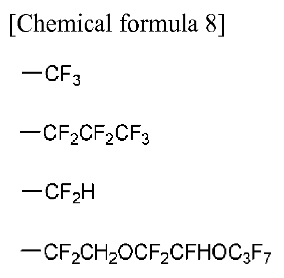

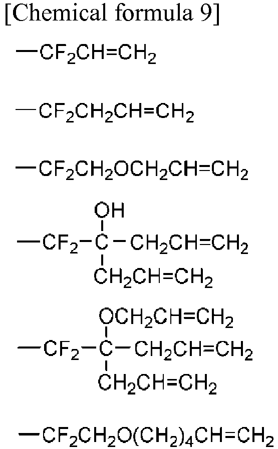

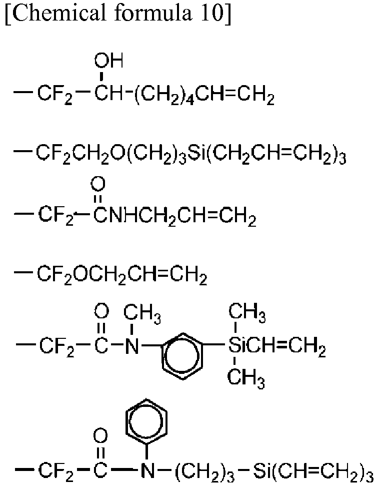

### -Component (B)-

The component (B) is a compound whose main chain has a perfluoropolyether structure. Further, this compound has, at at least one molecular chain end thereof (i.e. one end or both ends of the molecular chain), functional groups that are reactive with or are capable of forming salts with primary amino groups. Particularly, in the isolation and purification method of the present invention, the component (B) is a component to be isolated and removed by being adsorbed to a later-described solid adsorbent as a component (C) in a way such that the component (B) reacts or forms a salt(s) with the primary amino groups on the surface of the solid adsorbent as the component (C). It is preferred that the compound as the component (B) be that represented by the following general formula (2B):

[Chemical formula 11] X^{1B}-Rf-X^{2B} (2B)

Rf represents a perfluoropolyether chain. It is preferred that Rf be the perfluoropolyether chain represented by the above formula (1), more preferably the perfluoropolyether chain represented by the above formula (3). At least one of X^{1B} and X^{2B} (i.e. either one of or both X^{1B} and X^{2B}) represents an end group having a functional group that is reactive with or is capable of forming salts with primary amino groups. X^{1B} and X^{2B} may be either identical to or different from each other.

Examples of the "functional groups that are reactive with or are capable of forming salts with primary amino groups" include a carboxyl group, an ester group, an acrylic group, a methacrylic group, a ketone group and an acid anhydride group. More preferable examples of the "functional groups that are reactive with or are capable of forming salts with primary amino groups" include a carboxyl group and an ester group.

As for X^{1B} and X^{2B}, the following groups are specific examples of the end groups having functional groups that are reactive with or are capable of forming salts with primary amino groups, such end groups being regarded as essential in the component (B).

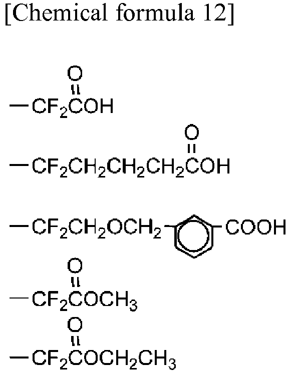

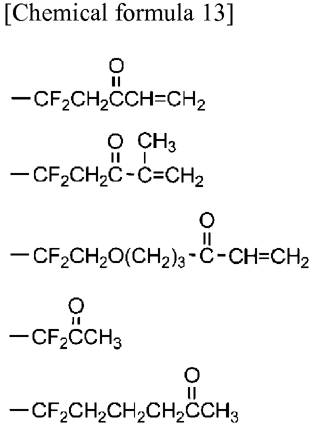

Further, as for X^{1B} and X^{2B}, groups similar to the functional groups that are listed as the examples of the above X^{1A} and X^{2A} may serve as specific examples of functional groups other than the end groups having functional groups that are reactive with or are capable of forming salts with primary amino groups. Those functional groups other than the end groups having functional groups that are reactive with or are capable of forming salts with primary amino groups, are optional in the component (B).

### [(C) Primary amino group-containing solid adsorbent]

The primary amino group-containing solid adsorbent used in the method of the present invention is a solid matter having primary amino groups on its surface. In the present invention, the solid matter is preferably selected from the group consisting of aluminum oxide, silica gel, magnesium oxide, aluminum silicate, magnesium silicate and diatom earth. Silica gel is particularly preferred. By mixing a primary amino group-containing silane coupling agent into silica gel and then allowing them to react with each other, there can be obtained a silica gel surface-modified by primary amino groups. As the primary amino group-containing solid adsorbent, a commercially available product may be used. Here, preferred is a product with a specific surface area of not smaller than 20 m²/g when measured by BET method, particularly preferred is a product with a specific surface area of not smaller than 100 m²/g when measured by the same method.

The amount of the primary amino group-containing solid adsorbent may simply be an amount sufficient to react with the component (B), and there are in fact no restrictions on the amount of the solid adsorbent. For example, the solid adsorbent may be used in an amount of 1 to 500 parts by mass, preferably 3 to 100 parts by mass, per 100 parts by mass of the mixture of the perfluoropolyether compounds.

### [Method for purifying perfluoropolyether compound]

The present invention is applied to the mixture containing at least two kinds of perfluoropolyether compounds that are composed of the components (A) and (B). The primary amino group-containing solid adsorbent (C) is allowed to come into contact with the mixture containing the components (A) and (B).

At that time, if the viscosity of the mixture of the perfluoropolyether compounds is high, this mixture may be diluted with a solvent without affecting the reaction between the components (B) and (C). As such solvent, a fluorine-modified solvent is preferred from the perspective of compatibility to the perfluoropolyether compounds. Specific examples of the solvent include: perfluoroalkanes each having 3 to 12 carbon atoms, such as perfluorohexane, perfluorooctane, perfluoroundecane and perfluorododecane; perfluoromonoethers each having 6 to 10 carbon atoms, such as perfluorodipropylether, perfluorodibutylether, perfluoro-2-trifluoromethyl-4-oxanonane and perfluorodipentylether; perfluoroalkylamines each having 3 to 15 carbon atoms, such as perfluorotriethylamine, perfluorotripropylamine, perfluorotributylamine and perfluorotriamylamine (perfluorotripentylamine); perfluoro-aromatic hydrocarbons each having 6 to 12 carbon atoms, such as hexafluorobenzene; chlorofluorocarbons each having 2 to 4 carbon atoms, such as R-113 (C₂F₃Cl₃) and 2,2,3,3-tetrachlorohexafluorobutane; hydrochlorofluorocarbons each having 3 to 6 carbon atoms, such as HCFC225 (CF₃CF₂CHCl₂, CClF₂CF₂CHClF); hydrofluoromonoethers each having 3 to 7 carbon atoms, such as C₃F₇OCH₃, C₄F₉OCH₃, C₄F₉OC₂H₅, C₂F₅CF(OCH₃)C₃F₇, CF₃CH₂OCF₂CHF₂, CHF₂CF₂CF₂CF₂CH₂OCH₃, CF₃CHFCF₂OCH₂CF₂CHF₂, CHF₂CF₂CH₂OCHFCF₃, CHF₂OCH₂CF₂CHFCF₃, CF₃CHFCF₂OCH₂CF₂CF₃, CHF₂OCH₂CF₂CHF₂, CF₃CHFCF₂OCH₂CF₃, CHF₂CF₂OCH₂CF₂CF₃, CF₃CH₂OCH₂CF₃, CF₃CH₂OCF₂CHF₂, CF₃CHFCF₂OCH₃, CHF₂OCH₂CF₂CF₃ and HCF₂CF₂OC₄H₉; hydrofluoroalkanes each having 3 to 8 carbon atoms, such as CF₃CH₂CF₂CH₃, CF₃CHFCHFC₂F₅, 1,1,2,2,3,3,4-heptafluorocyclopentane, CF₃CF₂CF₂ CF₂CH₂CH₃, CF₃CF₂CF₂CF₂CF₂ CF₂CH₂CH₃ and CF₃CF₂CF₂CF₂CF₂CHF₂; fluorine atom-containing alkenes each having 3 to 10 carbon atoms, such as C₄F₉CH=CH₂, C₆F₁₃CH=CH₂ and C₈F₁₇CH=CH₂; and fluorine atom-containing aromatic hydrocarbons each having 6 to 12 carbon atoms, such as m-xylenehexafluoride(1,3-bis(trifluoromethyl)benzene), trifluoromethylbenzene and monofluorobenzene.

As a method for bringing the primary amino group-containing solid adsorbent into contact with the mixture containing the components (A) and (B), there may be employed, for example, a method where the primary amino group-containing solid adsorbent (C) is at first added to the mixture that contains the components (A) and (B) and has been diluted with the above solvent if necessary, followed by stirring and thus mixing the mixture of: the mixture containing the components (A) and (B); and the component (C), until the components (B) and (C) have sufficiently reacted with each other. At that time, the mixture may also be heated in order to accelerate the reaction. A heating temperature is 30 to 150°C, preferably 40 to 100°C. A stirring and mixing time is 1 to 20 hours, preferably 1 to 8 hours.

Next, the mixture is separated in a way such that a solid phase (solid adsorbent (C) to which component (B) has been adsorbed) and a liquid phase (component (A)) are to be separated from each other by a method such as filtration, thereby obtaining the component (A) from which the component (B) has been eliminated.

Below is a case example where the mixture containing the components (A) and (B) is produced. In a perfluoropolyether compound having end carboxyl groups or end ester groups, when converting the end carboxyl groups or end ester groups into end hydroxyl groups by a reduction reaction, these end carboxyl groups or end ester groups may remain if such reduction reaction is insufficient. Here, when the reduction reaction is insufficient, a product obtained by the reaction is therefore a mixture possessing both the target perfluoropolyether compound having the end hydroxyl groups; and a perfluoropolyether compound having the end groups that are derived from the raw material compound (i.e. end carboxyl groups or end ester groups).

### [Working example]

The present invention is described in greater detail hereunder with reference to working and comparative examples. However, the invention is not limited to the following working examples.

Here, the number average molecular weight refers to a number average molecular weight in terms of polystyrene, which is measured by gel permeation chromatography (GPC) under the following conditions.

### [Gel permeation chromatography (GPC) method]

### [Measurement condition]

Developing solvent: Hydrochlorofluorocarbon (HCFC) -225
Flow rate: 1 mL/min.
Detector: Evaporative light scattering detector
Column: TSKgel Multipore HXL-M 7.8 mmφ × 30 cm by Tosoh Corporation; two columns used
Column temperature: 35°C
Sample injection amount: 100 µL (HCFC-225 solution with a concentration of 0.3% by mass)

As the perfluoropolyether compound as the component (A), compounds (A-1) to (A-3) having the following structures were used.

### (A-1) Compound represented by the following formula (4), and having a hydroxyl group at both ends

[Chemical formula 14] HOCH₂CF₂-O(CF₂O)ₚ-(C₂F₄O)_{q}-CF₂CH₂OH (4)

(The number average molecular weight of the perfluoropolyether chain (-O(CF₂O)ₚ-(C₂F₄O)_{q}-) is about 3,700; a ratio of p/q is 1.0. Here, although this compound contains a small amount of a (CF₂CF₂CF₂O) structure and a (CF₂CF₂CF₂CF₂O) structure, they are not mentioned in the working examples as they are merely contained in a minute amount and are thus ignorable.)

### (A-2) Compound represented by the following formula (5), and having an alkenyl group at both ends

[Chemical formula 15] Z-CF₂-O(CF₂O)ₚ-(C₂F₄O)q-CF₂-Z (5) -Z : -CH₂OCH₂CH=CH₂

(The number average molecular weight of the perfluoropolyether chain is about 3,700; a ratio of p/q is 1.0. Here, although this compound contains a small amount of the (CF₂CF₂CF₂O) structure and the (CF₂CF₂CF₂CF₂O) structure, they are not mentioned in the working examples as they are merely contained in a minute amount and are thus ignorable.)

### (A-3) Compound represented by the following formula (6), having a trifluoromethyl group at one end, and having a hydroxyl group and an alkenyl group at the other end

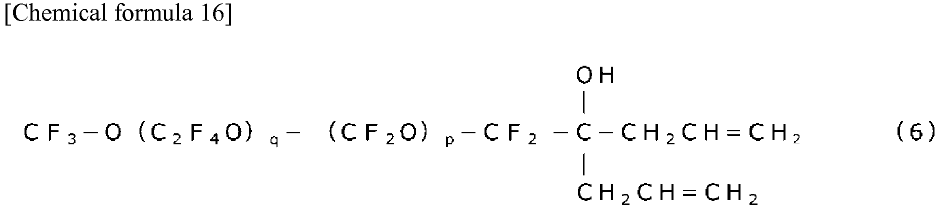

(The number average molecular weight of the perfluoropolyether chain is about 5,600; a ratio of p/q is 1.0. Here, although this compound contains a small amount of the (CF₂CF₂CF₂O) structure and the (CF₂CF₂CF₂CF₂O) structure, they are not mentioned in the working examples as they are merely contained in a minute amount and are thus ignorable.)

As the perfluoropolyether compound as the component (B), compounds (B-1) and (B-2) having the following structures were used.

### (B-1) Compound represented by the following formula (7), and having a methylester group at both ends

[Chemical formula 17]

H₃COOC-CF₂-O(CF₂O)ₚ-(C₂F₄O)_{q}-CF₂-COOCH₃ (7)

(The number average molecular weight of the perfluoropolyether chain is about 3,700; a ratio of p/q is 1.0. Here, although this compound contains a small amount of the (CF₂CF₂CF₂O) structure and the (CF₂CF₂CF₂CF₂O) structure, they are not mentioned in the working examples as they are merely contained in a minute amount and are thus ignorable.)

### (B-2) Compound represented by the following formula (8), and having a carboxyl group at one end

[Chemical formula 18]

CF₃-O(CF₂O)ₚ-(C₂F₄O)_{q}-CF₂-COOH (8)

(The number average molecular weight of the perfluoropolyether chain is about 3,700; a ratio of p/q is 1.0. Here, although this compound contains a small amount of the (CF₂CF₂CF₂O) structure and the (CF₂CF₂CF₂CF₂O) structure, they are not mentioned in the working examples as they are merely contained in a minute amount and are thus ignorable.)

### [Working example 1]

Put into a 100 mL four-necked flask equipped with a thermometer, a stirrer and a Dimroth condenser were 9.0 g of the compound (A-1), 1.0 g of the compound (B-1), 5.0 g of 1,3-bis(trifluoromethyl)benzene and 2.0 g of (C) a silica gel surface-modified by primary amino groups (silica gel 60 (spherical) NH₂ by Kanto Chemical Co., Inc.), followed by mixing them at 60°C for 6 hours. Next, the mixture in the flask was filtrated by a membrane filter, and silica gel remaining on the filter was then washed with 10 g of perfluorohexane. As a result of condensing the filtrate under a reduced pressure, there was recovered 8.8 g of a colorless and transparent purified product. This purified product was then analyzed by ¹⁹F-NMR. Here, a peak unique to (B-1) was not observed, whereas only a peak unique to (A-1) was observed.

### [Working example 2]

Put into a 100 mL four-necked flask equipped with a thermometer, a stirrer and a Dimroth condenser were 9.0 g of the compound (A-1), 1.0 g of the compound (B-2), 5.0 g of ASAHIKLIN AC 6000 (hydrofluoroalkane by AGC Inc.; C₆F₁₃C₂H₅) and 2.0 g of (C) a silica gel surface-modified by primary amino groups (silica gel 60 (spherical) NH₂ by Kanto Chemical Co., Inc.), followed by mixing them at 60°C for 6 hours. Next, the mixture in the flask was filtrated by a membrane filter, and silica gel remaining on the filter was then washed with 10 g of perfluorohexane. As a result of condensing the filtrate under a reduced pressure, there was recovered 8.7 g of a colorless and transparent purified product. This purified product was then analyzed by ¹⁹F-NMR. Here, a peak unique to (B-2) was not observed, whereas only a peak unique to (A-1) was observed.

### [Working example 3]

Put into a 100 mL four-necked flask equipped with a thermometer, a stirrer and a Dimroth condenser were 9.5 g of the compound (A-2), 0.5 g of the compound (B-1), 1.0 g of 1,3-bis(trifluoromethyl)benzene and 2.0 g of (C) a silica gel surface-modified by primary amino groups (silica gel 60 (spherical) NH₂ by Kanto Chemical Co., Inc.), followed by mixing them at 60°C for 6 hours. Next, the mixture in the flask was filtrated by a membrane filter, and silica gel remaining on the filter was then washed with 10 g of perfluorohexane. As a result of condensing the filtrate under a reduced pressure, there was recovered 8.7 g of a colorless and transparent purified product. This purified product was then analyzed by ¹⁹F-NMR. Here, a peak unique to (B-1) was not observed, whereas only a peak unique to (A-2) was observed.

### [Working example 4]

Put into a 100 mL four-necked flask equipped with a thermometer, a stirrer and a Dimroth condenser were 9.5 g of the compound (A-3), 0.5 g of the compound (B-1), 5.0 g of 1,3-bis(trifluoromethyl)benzene and 1.0 g of (C) a silica gel surface-modified by primary amino groups (silica gel 60 (spherical) NH₂ by Kanto Chemical Co., Inc.), followed by mixing them at 70°C for 4 hours. Next, the mixture in the flask was filtrated by a membrane filter, and silica gel remaining on the filter was then washed with 10 g of perfluorohexane. As a result of condensing the filtrate under a reduced pressure, there was recovered 8.8 g of a colorless and transparent purified product. This purified product was then analyzed by ¹⁹F-NMR. Here, a peak unique to (B-1) was not observed, whereas only a peak unique to (A-3) was observed.

### [Comparative example 1]

While other conditions remained the same as the working example 1, a surface-unmodified silica gel was used instead of the component (C).

Specifically, put into a 100 mL four-necked flask equipped with a thermometer, a stirrer and a Dimroth condenser were 9.0 g of the compound (A-1), 1.0 g of the compound (B-1) and 5.0 g of 1,3-bis(trifluoromethyl)benzene. A mixture thus prepared was analyzed by ¹⁹F-NMR, and it was confirmed that a ratio between the components (A-1) and (B-1) (molar ratio) was 89:11. A silica gel (silica gel 60 (spherical) by Kanto Chemical Co., Inc.) of 2.0 g was then put into the mixture, followed by mixing them at 60°C for 6 hours. Next, the mixture in the flask was filtrated by a membrane filter, and silica gel remaining on the filter was then washed with 10 g of perfluorohexane. As a result of condensing the filtrate under a reduced pressure, there was recovered 8.1 g of a colorless and transparent purified product. This purified product was then analyzed by ¹⁹F-NMR. Here, a peak unique to (A-1) and a peak unique to (B-1) were observed. The ratio between the components (A-1) and (B-1) (molar ratio) was 88:12, which indicated that the component (B-1) had not been eliminated.

### [Industrial applicability]

The present invention is useful to, for example, a mixture containing at least two kinds of perfluoropolyether compounds, which is produced as a result of performing a conversion reaction on end functional groups in a perfluoropolyether compound. By applying the method of the present invention to the mixture of perfluoropolyether compounds, there can be obtained a perfluoropolyether compound with a high modification ratio of target end functional groups. With such perfluoropolyether compound having a high modification ratio of the target end functional groups, properties unique to these target end functional groups will be fully exhibited, and the compound itself is thus useful as a precursor of various derivatives such as a surfactant and a surface treatment agent.

## Claims

1. An isolation and purification method of a perfluoropolyether compound,
wherein said method is a method for isolating and purifying a perfluoropolyether compound which has at molecular chain ends thereof only groups that are nonreactive with primary amino groups, wherein the groups that are nonreactive with primary amino groups are groups selected from a hydroxyl group, an alkenyl group, an amino group, a thiol group, and a halogenated alkyl group with a part of or all hydrogen atoms being substituted with halogen atoms, and
wherein said method comprises:
preparing:
(A) a perfluoropolyether compound having, at molecular chain ends thereof, only groups that are nonreactive with primary amino groups, wherein the groups in the component (A) that are nonreactive with primary amino groups are groups selected from a hydroxyl group, an alkenyl group, an amino group, a thiol group, and a halogenated alkyl group with a part of or all hydrogen atoms being substituted with halogen atoms, and having a number average molecular weight of 1,000 to 10,000,
(B) a perfluoropolyether compound having, at one or both molecular chain ends thereof, groups that are reactive with or are capable of forming salts with primary amino groups, and having a number average molecular weight of 1,000 to 10,000, and
(C) a primary amino group-containing solid adsorbent;
wherein the number average molecular weight of a perfluoropolyether compound (polyfluorooxyalkylene compound) refers to a number average molecular weight measured as specified in the description,
bringing the primary amino group-containing solid adsorbent (C) into contact with a mixture containing the perfluoropolyether compound (A) and the perfluoropolyether compound (B); and then
removing the perfluoropolyether compound (B) that has been adsorbed to the solid adsorbent (C).

2. The isolation and purification method of a perfluoropolyether compound according to claim 1,
wherein said method is a method for isolating and purifying a perfluoropolyether compound which is contained in a mixture containing at least two kinds of perfluoropolyether compounds, and has at molecular chain ends thereof only groups that are nonreactive with primary amino groups, and
wherein said method comprises:
preparing:
(A) the perfluoropolyether compound having, at molecular chain ends thereof, only groups that are nonreactive with primary amino groups, wherein the groups in the component (A) that are nonreactive with primary amino groups are groups selected from a hydroxyl group, an alkenyl group, an amino group, a thiol group, and a halogenated alkyl group with a part of or all hydrogen atoms being substituted with halogen atoms, and having the number average molecular weight of 1,000 to 10,000,
(B) the perfluoropolyether compound having, at at least one molecular chain end thereof, functional groups that are reactive with or are capable of forming salts with primary amino groups, and having the number average molecular weight of 1,000 to 10,000, and
(C) the primary amino group-containing solid adsorbent;
wherein the number average molecular weight of a perfluoropolyether compound (polyfluorooxyalkylene compound) refers to a number average molecular weight measured as specified in the description,
bringing the primary amino group-containing solid adsorbent (C) into contact with the mixture containing the perfluoropolyether compound (A) and the perfluoropolyether compound (B);
removing, from said mixture, the perfluoropolyether compound (B) that has been adsorbed to the solid adsorbent (C); and then
collecting the perfluoropolyether compound (A) having, at molecular chain ends thereof, only functional groups that are nonreactive with primary amino groups.

3. The isolation and purification method according to claim 1 or 2, wherein the primary amino group-containing solid adsorbent (C) is a solid adsorbent prepared by modifying, with primary amino groups, the surface of at least one selected from the group consisting of aluminum oxide, silica gel, magnesium oxide, aluminum silicate, magnesium silicate and diatom earth.

4. The isolation and purification method according to any one of claims 1 to 3, wherein the primary amino group-containing solid adsorbent (C) is a silica gel having primary amino groups on the surface thereof.

5. The isolation and purification method according to any one of claims 1 to 4, wherein the primary amino group-containing solid adsorbent (C) is a reaction product of silica gel and a primary amino group-containing silane coupling agent.

6. The isolation and purification method according to any one of claims 1 to 5, wherein the groups in the component (B) that are reactive with or are capable of forming salts with primary amino groups are groups selected from a carboxyl group, an ester group, an acrylic group, a methacrylic group, a ketone group and an acid anhydride group.

7. The isolation and purification method according to claim 6, wherein the groups in the component (B) that are reactive with or are capable of forming salts with primary amino groups are carboxyl groups and/or ester groups.

8. The isolation and purification method according to any one of claims 1 to 7, wherein each of the components (A) and (B) is a perfluoropolyether compound having, as a main chain, a perfluoropolyether chain Rf represented by the following formula (1):
[Chemical formula 1] -O(CF₂O)ₚ-(C₂F₄O)_{q}-(C₃F₆O)ᵣ-(C₄F₈O)ₛ- (1)
wherein each of p, q, r and s independently represents an integer of 0 to 200, and satisfies 10 ≤ (p+q+r+s) ≤ 300; and each unit shown in the bracket(s) may be bonded in a random manner.

## Patentansprüche

1. Isolier- und Reinigungsverfahren für eine Perfluorpolyetherverbindung,
wobei das Verfahren ein Verfahren zum Isolieren und Reinigen einer Perfluorpolyetherverbindung ist, die an Molekülkettenenden davon nur Gruppen aufweist, die mit primären Aminogruppen nicht reaktiv sind, wobei die Gruppen,
die mit primären Aminogruppen nicht reaktiv sind, Gruppen sind, die aus einer Hydroxylgruppe, einer Alkenylgruppe, einer Aminogruppe, einer Thiolgruppe und einer halogenierten Alkylgruppe ausgewählt sind, wobei ein Teil von oder alle Wasserstoffatome mit Halogenatomen substituiert sind, und
wobei das Verfahren umfasst:
das Herstellen:
A) einer Perfluorpolyetherverbindung, die an Molekülkettenenden davon nur Gruppen aufweist, die mit primären Aminogruppen nicht reaktiv sind, wobei die Gruppen in der Komponente (A), die mit primären Aminogruppen nicht reaktiv sind, Gruppen sind, die aus einer Hydroxylgruppe, einer Alkenylgruppe, einer Aminogruppe, einer Thiolgruppe und einer halogenierten Alkylgruppe ausgewählt sind, wobei ein Teil von oder alle Wasserstoffatome mit Halogenatomen substituiert sind, und ein zahlenmittleres Molekulargewicht von 1.000 bis 10.000 aufweist,
B) einer Perfluorpolyetherverbindung, die an einem oder beiden Molekülkettenenden davon Gruppen aufweist, die mit primären Aminogruppen reaktiv sind oder in der Lage sind, Salze mit diesen zu bilden, und ein zahlenmittleres Molekulargewicht von 1.000 bis 10.000 aufweist, und
C) eines primäre Aminogruppen enthaltenden festen Adsorptionsmittels;
wobei sich das zahlenmittlere Molekulargewicht einer Perfluorpolyetherverbindung (Polyfluorxyalkylenverbindung) auf ein zahlenmittleres Molekulargewicht, das, wie in der Beschreibung angegeben, gemessen wurde, bezieht,
das Inkontaktbringen des primäre Aminogruppen enthaltenden festen Adsorptionsmittels (C) mit einer die Perfluorpolyetherverbindung (A) und die Perfluorpolyetherverbindung (B) enthaltenden Mischung; und dann
Entfernen der Perfluorpolyetherverbindung (B), die an das feste Adsorptionsmittel (C) adsorbiert wurde.

2. Isolier- und Reinigungsverfahren für eine Perfluorpolyetherverbindung nach Anspruch 1,
wobei das Verfahren ein Verfahren zum Isolieren und Reinigen einer Perfluorpolyetherverbindung ist, die in einer Mischung, welche mindestens zwei Arten von Perfluorpolyetherverbindungen enthält, enthalten ist und an Molekülkettenenden davon nur Gruppen aufweist, die mit primären Aminogruppen nicht reaktiv sind, und
wobei das Verfahren umfasst:
das Herstellen:
(A) der Perfluorpolyetherverbindung, die an Molekülkettenenden davon nur Gruppen aufweist, die mit primären Aminogruppen nicht reaktiv sind, wobei die Gruppen in der Komponente (A), die mit primären Aminogruppen nicht reaktiv sind, Gruppen sind, die aus einer Hydroxylgruppe, einer Alkenylgruppe, einer Aminogruppe, einer Thiolgruppe und einer halogenierten Alkylgruppe ausgewählt sind, wobei ein Teil von oder alle Wasserstoffatome mit Halogenatomen substituiert sind, und das zahlenmittlere Molekulargewicht von 1.000 bis 10.000 aufweist,
(B) der Perfluorpolyetherverbindung, die an mindestens einem Molekülkettenende davon funktionelle Gruppen aufweist, die mit primären Aminogruppen reaktiv sind oder in der Lage sind, Salze mit diesen zu bilden, und das zahlenmittlere Molekulargewicht von 1.000 bis 10.000 aufweist, und
(C) des primäre Aminogruppen enthaltenden festen Adsorptionsmittels;
wobei sich das zahlenmittlere Molekulargewicht einer Perfluorpolyetherverbindung (Polyfluorxyalkylenverbindung) auf ein zahlenmittleres Molekulargewicht, das, wie in der Beschreibung angegeben, gemessen wurde, bezieht,
das Inkontaktbringen des primäre Aminogruppen enthaltenden festen Adsorptionsmittels (C) mit der die Perfluorpolyetherverbindung (A) und die Perfluorpolyetherverbindung (B) enthaltenden Mischung;
Entfernen der Perfluorpolyetherverbindung (B), die an das feste Adsorptionsmittel (C) adsorbiert wurde, von der Mischung und dann Sammeln der Perfluorpolyetherverbindung (A), die an Molekülkettenenden davon nur funktionelle Gruppen aufweist, die mit primären Aminogruppen nicht reaktiv sind.

3. Isolier- und Reinigungsverfahren nach Anspruch 1 oder 2, wobei das primäre Aminogruppen enthaltende feste Adsorptionsmittel (C) ein festes Adsorptionsmittel ist, das durch Modifizieren der Oberfläche von mindestens einem, ausgewählt aus der Gruppe, bestehend aus Aluminiumoxid, Kieselgel, Magnesiumoxid, Aluminiumsilikat, Magnesiumsilikat und Diatomerde, mit primären Aminogruppen hergestellt wird.

4. Isolier- und Reinigungsverfahren nach einem der Ansprüche 1 bis 3, wobei das primäre Aminogruppen enthaltende feste Adsorptionsmittel (C) ein Kieselgel mit primären Aminogruppen auf seiner Oberfläche ist.

5. Isolier- und Reinigungsverfahren nach einem der Ansprüche 1 bis 4, wobei das primäre Aminogruppen enthaltende feste Adsorptionsmittel (C) ein Reaktionsprodukt von Kieselgel und einem primäre Aminogruppen enthaltenden Silankopplungsmittel ist.

6. Isolier- und Reinigungsverfahren nach einem der Ansprüche 1 bis 5, wobei die Gruppen in der Komponente (B), die mit primären Aminogruppen reaktiv sind oder in der Lage sind, Salze mit diesen zu bilden, Gruppen sind, die aus einer Carboxylgruppe, einer Estergruppe, einer Acrylgruppe, einer Methacrylgruppe, einer Ketongruppe und einer Säureanhydridgruppe ausgewählt sind.

7. Isolier- und Reinigungsverfahren nach Anspruch 6, wobei die Gruppen in der Komponente (B), die mit primären Aminogruppen reaktiv sind oder in der Lage sind, Salze mit diesen zu bilden, Carboxylgruppen und/oder Estergruppen sind.

8. Isolier- und Reinigungsverfahren nach einem der Ansprüche 1 bis 7, wobei jede der Komponenten (A) und (B) eine Perfluorpolyetherverbindung ist, die als eine Hauptkette eine Perfluorpolyetherkette Rf aufweist, welche durch die folgende Formel (1) dargestellt ist:
[Chemische Formel 1]
-O(CF₂O)ₚ-(C₂F₄O)_{q}-(C₃F₆O)ᵣ-(C₄F₈O)ₛ- (1)
wobei jede von p, q, r und s unabhängig eine Ganzzahl von 0 bis 200 darstellt, und 10 ≤ (p+q+r+s) ≤ 300 erfüllt; und jede in der bzw. den Klammern gezeigte Einheit auf eine zufällige Weise gebunden werden kann.

## Revendications

1. Procédé d'isolement et de purification d'un composé perfluoropolyéther,
dans lequel ledit procédé est un procédé d'isolement et de purification d'un composé perfluoropolyéther qui, au niveau de ses extrémités de chaîne moléculaire, ne présente que des groupes qui ne sont pas réactifs avec des groupes amino primaires, les groupes qui ne sont pas réactifs avec des groupes amino primaires étant des groupes choisis parmi un groupe hydroxyle, un groupe alcényle, un groupe amino, un groupe thiol et un groupe alkyle halogéné avec une partie ou tous les atomes d'hydrogène étant substitués par des atomes d'halogène, et
dans lequel le procédé comprend :
la préparation :
(A) d'un composé perfluoropolyéther qui, au niveau de ses extrémités de chaîne moléculaire, ne présente que des groupes qui ne sont pas réactifs avec des groupes amino primaires, les groupes dans le composant (A) qui ne sont pas réactifs avec des groupes amino primaires étant des groupes choisis parmi un groupe hydroxyle, un groupe alcényle, un groupe amino, un groupe thiol et un groupe alkyle halogéné avec une partie ou tous les atomes d'hydrogène étant substitués par des atomes d'halogène, et ayant un poids moléculaire moyen en nombre de 1.000 à 10.000,
(B) d'un composé perfluoropolyéther ayant, à une ou aux deux extrémités de chaîne moléculaire de celui-ci, des groupes qui sont réactifs avec ou sont capables de former des sels avec des groupes amino primaires, et ayant un poids moléculaire moyen en nombre de 1.000 à 10.000, et
(C) d'un adsorbant solide contenant un groupe amino primaire ;
dans lequel le poids moléculaire moyen en nombre d'un composé perfluoropolyéther (composé polyfluorooxyalkylène) se réfère à un poids moléculaire moyen en nombre mesuré tel que spécifié dans la description, amenant l'adsorbant solide contenant un groupe amino primaire (C) en contact avec un mélange contenant le composé perfluoropolyéther (A) et le composé perfluoropolyéther (B) ; puis
l'élimination du composé perfluoropolyéther (B) qui a été adsorbé sur l'adsorbant solide (C).

2. Procédé d'isolement et de purification d'un composé perfluoropolyéther selon la revendication 1,
dans lequel ledit procédé est un procédé d'isolement et de purification d'un composé perfluoropolyéther qui est contenu dans un mélange contenant au moins deux types de composés perfluoropolyéther, et au niveau de ses extrémités de chaîne moléculaire ne présente que des groupes qui ne sont pas réactifs avec des groupes amino primaires, et
dans lequel le procédé comprend :
la préparation :
(A) du composé perfluoropolyéther qui, au niveau de ses extrémités de chaîne moléculaire, ne présente que des groupes qui ne sont pas réactifs avec des groupes amino primaires, les groupes dans le composant (A) qui ne sont pas réactifs avec des groupes amino primaires étant des groupes choisis parmi un groupe hydroxyle, un groupe alcényle, un groupe amino, un groupe thiol et un groupe alkyle halogéné avec une partie ou tous les atomes d'hydrogène étant substitués par des atomes d'halogène, et ayant le poids moléculaire moyen en nombre de 1.000 à 10.000,
(B) du composé perfluoropolyéther ayant, à au moins une extrémité de chaîne moléculaire de celui-ci, des groupes fonctionnels qui sont réactifs avec ou sont capables de former des sels avec des groupes amino primaires, et ayant le poids moléculaire moyen en nombre de 1.000 à 10.000, et
(C) de l'adsorbant solide contenant un groupe amino primaire ;
dans lequel le poids moléculaire moyen en nombre d'un composé perfluoropolyéther (composé polyfluorooxyalkylène) se réfère à un poids moléculaire moyen en nombre mesuré tel que spécifié dans la description, amenant l'adsorbant solide contenant un groupe amino primaire (C) en contact avec le mélange contenant le composé perfluoropolyéther (A) et le composé perfluoropolyéther (B) ;
l'élimination, à partir dudit mélange, du composé perfluoropolyéther (B) qui a été adsorbé sur l'adsorbant solide (C) ; et puis
la collection du composé perfluoropolyéther (A) ayant, à ses extrémités de chaîne moléculaire, seulement des groupes fonctionnels qui sont non réactifs avec des groupes amino primaires.

3. Procédé d'isolement et de purification selon la revendication 1 ou 2, dans lequel l'adsorbant solide contenant des groupes amino primaires (C) est un adsorbant solide préparé en modifiant, avec des groupes amino primaires, la surface d'au moins un élément choisi dans le groupe constitué par l'oxyde d'aluminium, le gel de silice, l'oxyde de magnésium, le silicate d'aluminium, le silicate de magnésium et la terre de diatomées.

4. Procédé d'isolement et de purification selon l'une quelconque des revendications 1 à 3, dans lequel l'adsorbant solide contenant des groupes amino primaires (C) est un gel de silice ayant des groupes amino primaires sur sa surface.

5. Procédé d'isolement et de purification selon l'une quelconque des revendications 1 à 4, dans lequel l'adsorbant solide contenant des groupes amino primaires (C) est un produit de réaction de gel de silice et d'un agent de couplage silane contenant un groupe amino primaire.

6. Procédé d'isolement et de purification selon l'une quelconque des revendications 1 à 5, dans lequel les groupes dans le composant (B) qui sont réactifs avec ou sont capables de former des sels avec des groupes amino primaires sont des groupes choisis parmi un groupe carboxyle, un groupe ester, un groupe acrylique, un groupe méthacrylique, un groupe cétone et un groupe anhydride d'acide.

7. Procédé d'isolement et de purification selon la revendication 6, dans lequel les groupes dans le composant (B) qui sont réactifs avec ou sont capables de former des sels avec des groupes amino primaires sont des groupes carboxyle et / ou des groupes ester.

8. Procédé d'isolement et de purification selon l'une quelconque des revendications 1 à 7, dans lequel chacun des composants (A) et (B) est un composé perfluoropolyéther ayant, en tant que chaîne principale, une chaîne perfluoropolyéther Rf représentée par la formule (1) suivante :
[Formule Chimique 1] -O(CF₂O)ₚ-(C₂F₄O)_{q}-(C₃F₆O)ᵣ-(C₄F₈O)ₛ- (1)
dans laquelle chacun de p, q, r et s représente indépendamment un entier de 0 à 200, et satisfait à 10 ≤ (p+q+r+s) ≤ 300 ; et chaque unité représentée dans le ou les support(s) peut être liée d'une manière aléatoire.
